(19) Europäisches Patentamt
European Patent Office
Office européen des brevets

(11) **EP 2 438 029 B1**

(12) **FASCICULE DE BREVET EUROPEEN**

(45) Date de publication et mention
de la délivrance du brevet:
**23.10.2013 Bulletin 2013/43**

(21) Numéro de dépôt: **10728315.2**

(22) Date de dépôt: **01.06.2010**

(51) Int Cl.:
**C04B 35/626** (2006.01)

(86) Numéro de dépôt international:
**PCT/IB2010/052447**

(87) Numéro de publication internationale:
**WO 2010/140121 (09.12.2010 Gazette 2010/49)**

(54) **PRODUIT FRITTE A BASE D'ALUMINE ET DE ZIRCONE**

GESINTERTES ALUMINIUM- UND ZIRKONIUMMATERIAL

ALUMINA AND ZIRCONIA SINTERED MATERIAL

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **03.06.2009 FR 0953667**

(43) Date de publication de la demande:
**11.04.2012 Bulletin 2012/15**

(73) Titulaire: **Saint-Gobain Centre De Recherches
Et D'etudes Europeen
92400 Courbevoie (FR)**

(72) Inventeurs:
• **NONNET, Emmanuel, Pierre, Marcel
F-84260 Sarrians (FR)**
• **BOUSSANT ROUX, Yves, Marcel, Léon
F-84140 Montfavet (FR)**

(74) Mandataire: **Sartorius, Jérome
Cabinet Nony
3, rue de Penthièvre
75008 Paris (FR)**

(56) Documents cités:
WO-A-2009/018024    WO-A1-2008/040813
AU-B2- 592 823      FR-A- 2 579 199
JP-A- 1 083 566     JP-A- 6 183 833
US-A- 4 316 964

• CUTLER R A ET AL: "Damage-resistant SrO-doped Ce-tzP/Al2O3 composites", MATERIALS AND DESIGN, LONDON, GB, vol. 15, no. 3, 1 January 1994 (1994-01-01), pages 123-133, XP024153808, ISSN: 0261-3069, DOI: 10.1016/0261-3069(94)90111-2 [retrieved on 1994-01-01]

**Description**

**Domaine technique**

L'invention concerne un produit fritté à base d'alumine et de zircone, en particulier des billes frittées, et leur utilisation dans des broyeurs.

**Arrière-plan de l'invention**

Parmi les produits réfractaires, on distingue les produits fondus et coulés et les produits frittés.

A la différence des produits frittés, les produits fondus et coulés comportent le plus souvent une phase vitreuse intergranulaire très abondante qui vient remplir un réseau de grains cristallisés. Les problèmes rencontrés dans leurs applications respectives par les produits frittés et par les produits fondus et coulés, et les solutions techniques adoptées pour les résoudre, sont donc généralement différents. Par ailleurs, du fait des différences importantes entre les procédés de fabrication, une composition mise au point pour fabriquer un produit fondu et coulé n'est pas a *priori* utilisable telle quelle pour fabriquer un produit fritté, et réciproquement.

Les produits frittés sont obtenus par mélange de matières premières appropriées puis mise en forme à cru de ce mélange et cuisson de la pièce crue résultante à une température et pendant un temps suffisants pour obtenir le frittage de cette pièce crue.

Les produits frittés, selon leur composition chimique, présentent des propriétés différentes et sont donc destinés à des industries très variées.

Une application très spécifique est l'utilisation de produits frittés, classiquement sous la forme de billes, comme média de broyage, notamment pour broyer finement des matières minérales, inorganiques ou organiques. Dans cette application, les billes sont dispersées dans un milieu aqueux ou un solvant, dont la température peut dépasser 80°C, et subissent des frottements par contact avec la matière à broyer, par contact mutuel et par contact avec les organes du broyeur. La durée de vie des billes dépend alors directement de leur résistance à l'usure dans ce milieu aqueux ou solvant.

US 2009/0036291 (ou WO 2009/018024) divulgue des billes frittées à base de zircone et d'alumine qui comportent environ 9% à 12% d'oxyde de cérium $CeO_2$ et entre 0,01% et 0,8% de chaux CaO. Il les compare à des billes $CeO_2$-TZP (en anglais « $CeO_2$-stabilized tetragonal zirconia polycristals »), mais considère, sur la base de données historiques, qu'il n'y a pas lieu de la comparer avec des billes Y-TZP, connues pour leurs piètres performances en milieu aqueux.

La modification de la composition d'une bille frittée, notamment par l'incorporation d'un nouvel oxyde, même en quantité réduite, peut avoir des conséquences très sensibles sur ses propriétés. Il est également connu que la quantité de phase stabilisée d'une zircone peut être modifiée par traitement thermique ou mécanique de cette zircone.

Afin d'augmenter les rendements des opérations de broyage, les particules de broyage doivent être de plus en plus résistantes à l'usure, tout en présentant une résistance élevée à la dégradation dans un milieu liquide chaud, en particulier lorsqu'elles sont en contact avec une eau à plus de 80°C, ces conditions étant appelées ci-après « conditions hydrothermales ».

Par ailleurs, on cherche en permanence à augmenter le rendement de broyage, c'est-à-dire à obtenir une quantité de broyat maximale pour un coût déterminé.

Un but de l'invention est de répondre, au moins partiellement, à ces besoins.

**Résumé de l'invention**

L'invention propose une particule frittée selon la revendication 1.

Comme on le verra plus en détail dans la suite de la description, de telles particules frittées présentent une excellente résistance à l'usure, y compris en conditions hydrothermales.

Par ailleurs, la densité de ces particules est relativement peu élevée. Or la masse de particules pouvant être chargée dans un broyeur constitue généralement un facteur limitant. La densité des particules frittées selon l'invention permet avantageusement de charger un grand nombre de ces particules.

En outre, elles présentent des teneurs en zircone et en $CeO_2$ réduites. Or, la zircone et la cérine sont des matériaux coûteux. Pour un budget déterminé, il est donc possible de fabriquer plus de particules frittées et d'en introduire un nombre élevé dans les broyeurs. Les particules frittées selon l'invention permettent donc d'obtenir un très bon rendement de broyage.

En somme, les particules frittées selon l'invention permettent d'obtenir un excellent compromis entre la résistance à l'usure en conditions hydrothermales et le rendement de broyage.

Une particule frittée selon l'invention peut encore présenter une ou plusieurs des caractéristiques optionnelles suivantes :

- Ladite teneur molaire en $CeO_2$ est inférieure à 10,0%, de préférence inférieure 9,5%, et/ou de préférence supérieure à 7,0%, de préférence supérieure à 7,5%, de préférence supérieure à 8,0%, voire supérieure à 8,5%, en pourcentage molaire sur la base de la somme de $ZrO_2$, $CeO_2$ et $Y_2O_3$.
- Ladite teneur molaire en $Y_2O_3$ est inférieure à 1,9%, inférieure à 1,7%, inférieure à 1,5%, inférieure à 1,2% et/ou supérieure à 0,7%, voire supérieure à 0,8%, en pourcentage molaire sur la base de la somme de $ZrO_2$, $CeO_2$ et $Y_2O_3$.
- Dans un mode de réalisation particulier, ladite teneur molaire en $CeO_2$ est comprise entre 8,5% et 9,5% et ladite teneur molaire en $Y_2O_3$ est comprise entre 0,8% et 1,2%, en pourcentages molaires sur la base de la somme de $ZrO_2$, $CeO_2$ et $Y_2O_3$.
- La teneur en alumine $Al_2O_3$ est supérieure à 15%, voire supérieure à 20% et/ou inférieure à 55%, voire inférieure à 50%, voire inférieure à 40%, voire inférieure à 35%, en pourcentage massique sur la base des oxydes.
- L'oxyde de manganèse est sélectionné parmi MnO, $MnO_2$, $Mn_2O_3$, $Mn_3O_4$ et leurs mélanges. De préférence, l'oxyde de manganèse est sélectionné parmi MnO, $Mn_3O_4$ et leurs mélanges.
- L'oxyde de praséodyme est $Pr_6O_{11}$.
- L'oxyde de cuivre est CuO.
- L'oxyde de fer est sélectionné parmi FeO, $Fe_2O_3$ et leurs mélanges.
- L'additif est choisi parmi CaO, MnO, $MnO_2$, $Mn_2O_3$, $Mn_3O_4$, ZnO, $La_2O_3$, SrO, et leurs mélanges.
- L'additif est choisi parmi CaO, un oxyde de manganèse, $La_2O_3$, SrO, BaO, et leurs mélanges, de préférence parmi CaO, MnO, $MnO_2$, $Mn_2O_3$, $Mn_3O_4$ et leurs mélanges.
- De préférence, l'additif est choisi parmi CaO, MnO, $Mn_3O_4$ et leurs mélanges. De préférence encore, l'additif est un mélange de CaO d'une part et de MnO et/ou $Mn_3O_4$ d'autre part. De préférence l'additif est choisi parmi CaO, MnO et leurs mélanges. De préférence encore, l'additif est un mélange de CaO et de MnO.
- La teneur en additif est supérieure à 0,3%, supérieure à 0,4%, voire supérieure à 0,5% ou supérieure à 0,6%, et/ou inférieure à 5%, voire inférieure à 4%, voire inférieure à 3%, voire inférieure à 2,5%, voire inférieure à 2%, voire inférieure à 1,5%, voire inférieure à 1 %, en pourcentage en masse sur la base des oxydes.
- L'additif comporte CaO, la teneur en CaO étant supérieure à 0,3%, voire supérieure à 0,4%, supérieure à 0,5% et/ou inférieure à 1,5%, de préférence inférieure à 1%, voire inférieure à 0,8%, inférieure à 0,6%, en pourcentage en masse sur la base des oxydes.
- L'additif comporte CaO et un deuxième composé d'additif choisi parmi MnO, $MnO_2$, $Mn_2O_3$, $Mn_3O_4$, ZnO, $La_2O_3$, SrO, et leurs mélanges, en particulier un mélange de MnO et de $Mn_3O_4$, la teneur dudit deuxième composé d'additif étant de préférence supérieure à 0,1%, supérieure à 0,2% et/ou inférieure à 4,0%, de préférence inférieure à 3,5%, voire inférieure à 3,0%, voire inférieure à 2,5%, voire inférieure à 2,0%, voire inférieure à 1,5%, voire inférieure à 1,0%, voire inférieure à 0,8%, inférieure à 0,6%, ou même inférieure à 0,5%, ou inférieure à 0,4%, voire inférieure à 0,3%, en pourcentage en masse sur la base des oxydes.
- La teneur en $La_2O_3$ est inférieure à 5,2%, inférieure à 5,0%, voire inférieure à 4,5%, en pourcentage massique sur la base des oxydes.
- La teneur en impuretés est inférieure à 1,0%, de préférence inférieure à 0,8%, de préférence inférieure à 0,5%, voire inférieure à 0,3%, en pourcentage massique sur la base des oxydes. Dans un mode de réalisation, les impuretés sont constituées d'oxydes.
- De préférence, la teneur en silice $SiO_2$ est inférieure à 1,5%, inférieure à 1,0%, de préférence inférieure à 0,7%, de préférence inférieure à 0,5%, en pourcentage massique sur la base des oxydes
- La particule est obtenue par frittage à une température supérieure ou égale 1320°C, supérieure à 1400°C, supérieure à 1425°C et/ou inférieure à 1550°C. En particulier, elle peut être obtenue suivant un procédé selon l'invention, décrit ci-après.
- De préférence, la taille moyenne sur l'ensemble des grains de zircone partiellement stabilisée et des grains d'alumine d'une particule frittée selon l'invention est inférieure à 3 $\mu$m, de préférence inférieure à 2,5 $\mu$m, voire inférieure à 2 $\mu$m, voire inférieure à 1,5 $\mu$m, voire inférieure à 1 $\mu$m, voire inférieure à 0,8 $\mu$m, et de préférence supérieure à 0,1 $\mu$m.
- La particule frittée se présente sous la forme d'une bille, de préférence d'une bille présentant une sphéricité supérieure à 0,7.
- La particule frittée présente des grains de forme allongée.
- Plus de 80%, plus de 90%, voire sensiblement 100% en nombre des grains de forme allongée présentent une forme générale rectiligne.
- Le taux de grains de forme allongée mesuré en diffraction X est de préférence supérieur à 0,05%, de préférence supérieur à 0,10%, de préférence supérieur à 0,15%, de préférence supérieur à 0,20%, de préférence supérieur à 0,25%, de préférence supérieur à 0,3%, voire supérieur à 0,4% et/ou inférieur à 5%, voire inférieur à 3%, de préférence inférieur à 2%, de préférence inférieur à 1%. La mesure du taux de grains de forme allongée est détaillée dans la suite de la présente description.

- Ces grains de forme allongée comportent l'élément Al et les cations métalliques des oxydes ajoutés à titre d'additif (Ca et/ou Mn et/ou Zn et/ou La et/ou Pr et/ou Sr et/ou Cu et/ou Nd et ou Ba et/ou Fe). Ces grains de forme allongée peuvent également comporter l'élément Cérium (Ce). Ainsi, si l'additif comporte CaO et MnO, les grains de forme allongée comportent les éléments Al, Ca, Mn et Ce.
- La densité de la particule frittée est supérieure à 4,8 g/cm$^3$, voire supérieure à 4,9 g/cm$^3$ et/ou inférieure à 5,5 g/cm$^3$, voire inférieure à 5,3 g/cm$^3$.
- La particule frittée est fabriquée par un procédé ne comportant pas une étape de compression isostatique à chaud (HIP : Hot isostatic pressing).
- La particule frittée est fabriquée par un procédé comportant une étape de gélification en goutte à goutte (« Drip casting » en anglais).

L'invention concerne également un ensemble de particules comprenant plus de 90%, de préférence plus de 95%, de préférence environ 100%, en pourcentage en masse, de particules frittées selon l'invention.

L'invention concerne aussi un procédé de fabrication de particules frittées selon l'invention, notamment de billes frittées, comprenant les étapes successives suivantes :

a) si nécessaire, broyage d'une ou de plusieurs des poudres de matières premières, de préférence par cobroyage, de manière à obtenir, par mélange desdites poudres, un mélange particulaire présentant une taille médiane inférieure à 1,0 $\mu$m,

b) préparation d'une suspension à partir desdites poudres, la composition de la suspension étant adaptée de manière à obtenir, à l'issue de l'étape f), des particules frittées présentant une composition conforme à celle d'une particule frittée selon l'invention,

c) durcissement de gouttes de la suspension sous la forme de particules crues,

d) lavage,

e) séchage,

f) frittage à une température de frittage supérieure à 1300°C de manière à obtenir des particules frittées,

la température de frittage étant supérieure à 1400°C, de préférence supérieure à 1425°C :

(C'1) si la suspension ne contient pas de composé de Mn, Zn, Cu, Pr, Nd, Sr, La, Ba ou Fe, c'est-à-dire si l'additif dans les particules frittées est CaO, ou

(C'2) si la suspension est telle que la teneur molaire en CeO$_2$ des particules frittées obtenues en fin d'étape f), en pourcentage molaire sur la base de la somme de ZrO$_2$, CeO$_2$ et Y$_2$O$_3$, est comprise entre 10% et 11%.

Un procédé selon l'invention peut encore comporter une ou plusieurs des caractéristiques optionnelles suivantes :

- On effectue une étape a) de broyage d'une ou de plusieurs des poudres de matières premières, de préférence par cobroyage, de manière à obtenir, par mélange desdites poudres, un mélange particulaire présentant une taille médiane inférieure à 0,6 $\mu$m, de préférence inférieure à 0,5 $\mu$m, de préférence inférieure à 0,3 $\mu$m, de préférence inférieure à 0,2 $\mu$m.
- Le procédé ne comporte pas une étape de compression isostatique, en particulier à chaud (HIP : Hot isostatic pressing), au moins avant la fin de l'étape de frittage.
- La température de frittage est inférieure à 1550°C.
- La température de frittage est supérieure ou égale à 1320°C, supérieure à 1400°C, supérieure à 1425°C.

L'invention concerne également l'utilisation de particules frittées selon l'invention ou fabriquées ou pouvant être fabriquées suivant un procédé selon l'invention comme média de broyage, en particulier pour du microbroyage. L'invention concerne encore un broyeur contenant des particules frittées selon l'invention.

L'invention concerne aussi un mélange particulaire comportant des particules de ZrO$_2$, de Al$_2$O$_3$, de CeO$_2$, et de Y$_2$O$_3$, et éventuellement des particules de CaO, et/ou d'un oxyde de manganèse et/ou de ZnO et/ou de La$_2$O$_3$ et/ou d'un oxyde de praséodyme et/ou de SrO et/ou d'un oxyde de cuivre et/ou de Nd$_2$O$_3$ et/ou de BaO et/ou d'un oxyde de fer et/ou des particules de précurseurs de ces oxydes dans des proportions telles que, par frittage dudit mélange particulaire, on peut obtenir une particule frittée selon l'invention.

Avantageusement, un tel mélange particulaire est prêt à l'emploi. Il peut notamment servir à l'étape b) pour fabriquer la suspension.

Un mélange particulaire selon l'invention peut en particulier être conditionné dans des sacs.

De préférence, la taille médiane dudit mélange particulaire est inférieure à 1 $\mu$m, de préférence inférieure à

0,6 $\mu$m, de préférence inférieure à 0,5 $\mu$m, de préférence inférieure à 0,3 $\mu$m, voire inférieure à 0,2 $\mu$m.

**Définitions**

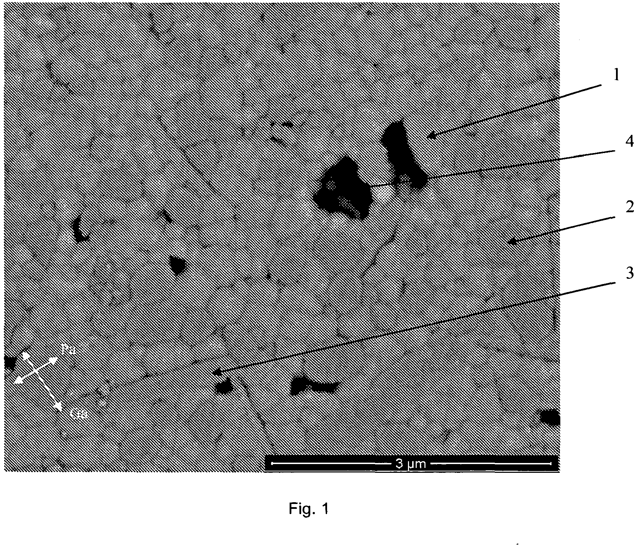

- Par « particule », on entend un produit solide individualisé dans une poudre.
- On appelle « frittage » la consolidation par traitement thermique à plus de 1100°C d'un aggloméré granulaire, avec éventuellement une fusion, partiellement ou totale, de certains de ses constituants (mais pas de tous ses constituants).
- Par « bille », on entend une particule présentant une sphéricité, c'est-à-dire un rapport entre son plus petit diamètre et son plus grand diamètre, supérieure à 0,6, quelle que soit la façon par laquelle cette sphéricité a été obtenue.
- On appelle « taille médiane » d'un ensemble de particules, généralement notée $D_{50}$, la taille divisant les particules de cet ensemble en première et deuxième populations égales en masse, ces première et deuxième populations ne comportant que des particules présentant une taille supérieure, ou inférieure respectivement, à la taille médiane. La taille médiane peut par exemple être mesurée à l'aide d'un granulomètre laser.
- On appelle « taille moyenne » des grains d'une particule frittée, la dimension mesurée selon une méthode de « Mean Linear Intercept ». Une méthode de mesure de ce type est décrite dans la méthode ASTM E1382, un coefficient correcteur dépendant de la distribution des grains étant également appliqué.
- Par « un oxyde de manganèse », on entend un ou plusieurs oxydes de manganèse. On peut citer notamment MnO, $Mn_2O_3$, $MnO_2$ et $Mn_3O_4$.
- Par « un oxyde de fer », on entend un ou plusieurs oxydes de fer. On peut citer notamment FeO, $Fe_2O_3$, $Fe_3O_4$.
- Par « un oxyde de praséodyme », on entend un ou plusieurs oxydes de praséodyme. On peut citer notamment $Pr_2O_3$.
- Par « un oxyde de cuivre », on entend un ou plusieurs oxydes de cuivre. On peut citer notamment CuO et $Cu_2O$.
- Par « impuretés », on entend les constituants inévitables, introduits nécessairement avec les matières premières. En particulier les composés faisant partie du groupe des oxydes, nitrures, oxynitrures, carbures, oxycarbures, carbonitrures et espèces métalliques de sodium et autres alcalins, vanadium et chrome sont des impuretés. A titre d'exemples, on peut citer $Na_2O$ ou MgO. En revanche, l'oxyde d'hafnium n'est pas considéré comme une impureté.
- $HfO_2$ n'est pas chimiquement dissociable de $ZrO_2$. Dans la composition chimique d'un produit comportant de la zircone, $ZrO_2$ désigne donc la teneur totale de ces deux oxydes. Cependant, selon la présente invention, $HfO_2$ n'est pas ajouté volontairement dans la charge de départ. $HfO_2$ ne désigne donc que les traces d'oxyde d'hafnium, cet oxyde étant toujours naturellement présent dans les sources de zircone à des teneurs généralement inférieures à 2%. Par souci de clarté, on peut donc désigner indifféremment la teneur en zircone et en traces d'oxyde d'hafnium par $ZrO_2+HfO_2$ ou par $ZrO_2$, on encore par « teneur en zircone ».
- Par « précurseur » d'un oxyde, on entend un constituant apte à fournir ledit oxyde lors de la fabrication d'une particule frittée selon l'invention. Par exemple, le carbonate de baryum $BaCO_3$ est un précurseur possible de BaO.
- On appelle « facteur de forme d'un grain », noté « F », l'inverse du rapport entre la plus grande dimension «Ga» du grain et la plus grande dimension mesurée perpendiculairement à la direction de la dimension Ga, notée « Pa » : F = Pa/Ga. Ces dimensions sont mesurées dans un plan d'observation d'une coupe polie de la particule frittée, classiquement sur des clichés photographiques de cette coupe (voir Figure 1).
- On appelle « grain de forme allongée », un grain présentant un facteur de forme F inférieur à 0,4.
- Les inventeurs ont constaté qu'un produit selon l'invention comporte, en fonction de l'additif, une phase de type hibonite et/ou une phase de type magnéto-plombite et que ces phases ne sont sensiblement présentes que dans les grains de forme allongée. La mesure de la quantité de ces phases peut donc être utilisée pour évaluer la quantité de grains de forme allongée. Ainsi, on définit le « taux de grains de forme allongée », en %, selon la formule (1) suivante :

$$T = 100* (A_{\text{Grains allongés}})/ (A_{\text{Grains allongés}} + A_{Al2O3} + A_{ZrO2})$$

(1)

où

○ $A_{\text{Grains allongés}}$ est la somme des aires mesurées sur un diagramme de diffraction X

■ du pic correspondant à la réflexion <110> de la phase de type hibonite (fiche ICDD n°38- 0470), et

■ du pic correspondant à la réflexion <107> de la phase de type magnéto-plombite (fiche ICDD n°04-0704) ;

○ $A_{Al2O3}$ est l'aire, mesurée sur le même diagramme, du pic correspondant à la réflexion <012> de la phase $Al_2O_3$ (fiche ICDD n°43- 1484), mesurée dans le domaine angulaire 2θ compris entre 24, 5° et 26, 5°, théoriquement centré sur un angle 2θ de 25, 58° ;

○ $A_{ZrO2}$ est l'aire, mesurée sur le même diagramme, du pic correspondant à la réflexion <111> de la phase tétragonale de $ZrO_2$ (fiche ICDD n°17-0923) mesurée dans le domaine angulaire 2θ compris entre 26,5° et 31,3°, théoriquement centré sur un angle 2θ de 30,19°.

Les mesures des aires $A_{Grains\ allongés}$, $A_{Al2O3}$ et $A_{ZrO2}$ sont effectuées sur un même diagramme de diffraction X, obtenu à partir d'un appareil du type diffractomètre X'pert de la société PANalytical pourvu d'un tube DX en cuivre. Le pas est réglé à 0,008° et 600 s/pas dans les plages d'angle 2θ de 24,5° à 26,5° et 31,3° à 33,6°, à 0,033° et 300s/pas dans la plage d'angle 2θ 26,5° à 31,3°. Un traitement de déconvolution utilisant la fonction pseudo Voigt est effectué à l'aide du logiciel TOPAS de la société BRUKER sur les amplitudes des pics exprimés en coups par seconde.

On appelle « pic correspondant à la réflexion <110> de la phase de type hibonite » et « pic correspondant à la réflexion <107> de la phase de type magnéto- plombite », le pic le plus élevé dans une plage d'angles 2θ comprise entre 31, 19° et 33, 19°, et entre 31, 29° et 33, 29°, respectivement. Ces plages sont centrées sur les angles 2θ de 32, 19° et 32, 29°, correspondant au pic d'une phase purement hibonite (fiche ICDD n°38- 0470) et au pic d'une phase purement magnéto- plombite (fiche ICDD n°04- 0704) ), respectivement. Le décalage par rapport à ces valeurs d'angle 2θ est fonction de la nature de l'additif utilisé. La nature de l'additif détermine également la présence d'un pic correspondant à la réflexion <110> d'une phase de type hibonite et/ou d'un pic correspondant à la réflexion <107> d'une phase de type magnéto- plombite.

Sauf mention contraire, tous les pourcentages relatifs à la composition d'un produit ou relatifs à une charge de départ sont des pourcentages massiques sur la base des oxydes et tous les pourcentages de $CeO_2$ et $Y_2O_3$ sont des pourcentages molaires sur la base de la somme de $ZrO_2$, $CeO_2$ et $Y_2O_3$.

## Brève description des figures

D'autres caractéristiques et avantages de l'invention apparaîtront encore à la lecture de la description détaillée qui va suivre et à l'examen du dessin annexé dans lequel la figure 1 représente une photographie d'une coupe polie d'une particule frittée de l'exemple 2, selon l'invention, obtenue après frittage à une température de 1375°C, cette particule ayant subi, après polissage, une attaque thermique à 1275°C pendant 30 minutes pour révéler les joints de grains.

## Description détaillée

Pour fabriquer des particules frittées selon l'invention, on peut procéder suivant les étapes a) à f) décrites ci-dessus et détaillées ci-dessous.

De préférence, les poudres utilisées, notamment les poudres de $ZrO_2$, d'alumine $Al_2O_3$, de $Y_2O_3$, de $CeO_2$, et d'additif présentent chacune une taille médiane inférieure à 5 μm, voire inférieure à 3 μm, inférieure à 1 μm, inférieure à 0,7 μm, de préférence inférieure à 0,6 μm, de préférence inférieure à 0,5 μm, de préférence inférieure à 0,3 μm, voire inférieure à 0,2 μm. Avantageusement, lorsque que chacune de ces poudres présente une taille médiane inférieure à 1 μm, de préférence inférieure à 0,6 μm, de préférence inférieure à 0,5 μm, de préférence inférieure à 0,3 μm, voire inférieure à 0,2 μm, l'étape a) est optionnelle.

La mise en oeuvre de poudres présentant une faible taille médiane permet également, avantageusement, de réduire la température de frittage.

De préférence, la poudre de zircone utilisée présente une aire spécifique, calculée par la méthode BET, supérieure à 5 m²/g, de préférence supérieure à 8 m²/g, de préférence supérieure à 10 m²/g et inférieure à 30 m²/g. Avantageusement, la température de frittage à l'étape f) est réduite, et le broyage à l'étape a), généralement en suspension, et la mise en suspension à l'étape b) en sont facilitées.

A l'étape a), les poudres de matières premières peuvent être broyées individuellement ou, de préférence, cobroyées, si elles ne respectent pas la distribution granulométrique souhaitée, et en particulier si elles présentent une taille médiane supérieure à 1 μm, supérieure à 0,6 μm, supérieure à 0,5 μm, supérieure à 0,3 μm ou supérieure à 0,2 μm.

A l'étape b), on prépare à température ambiante une suspension à base d'eau ou d'un solvant, dite « barbotine », comportant des poudres de $ZrO_2$, $Al_2O_3$, $CeO_2$, et $Y_2O_3$ et, le cas échéant, une ou plusieurs poudres de CaO, et/ou d'un oxyde de manganèse, et/ou de ZnO, et/ou de $La_2O_3$, et/ou d'un oxyde de praséodyme, et/ou de SrO, et/ou d'un oxyde de cuivre, et/ou de $Nd_2O_3$, et/ou de BaO et/ou d'un oxyde de fer.

Ces poudres peuvent également être remplacées, au moins partiellement, par des poudres de précurseurs de ces oxydes, introduits dans des quantités équivalentes.

Les inventeurs ont découvert que l'ajout de CaO et/ou d'un oxyde de manganèse, et/ou de ZnO, et/ou de $La_2O_3$, et/ou d'un oxyde de praséodyme, et/ou de SrO, et/ou d'un oxyde de cuivre, et/ou de $Nd_2O_3$, et/ou de BaO, et/ou d'un oxyde de fer et/ou de précurseurs de ces oxydes permet d'augmenter la quantité de grains de forme allongée contenues dans les particules frittées et d'améliorer les performances mécaniques.

Les inventeurs ont également découvert que l'ajout d'un oxyde de manganèse, et/ou de ZnO, et/ou de $La_2O_3$, et/ou d'un oxyde de praséodyme, et/ou de SrO, et/ou d'un oxyde de cuivre, et/ou de $Nd_2O_3$, et/ou de BaO, et/ou d'un oxyde de fer et/ou de précurseurs de ces oxydes permet de diminuer la température de frittage en dessous de 1400°C, en dessous de 1350°C, et même jusqu'à 1300°C si la teneur molaire en $CeO_2$ des particules frittées selon l'invention est comprise entre 7% et 10%.

Les poudres apportant les oxydes ou les précurseurs sont de préférence choisies de manière que la teneur totale en impuretés soit inférieure à 2%, en pourcentage massique sur la base des oxydes.

Dans un mode de réalisation particulier, $Y_2O_3$ est introduit sous la forme d'une zircone partiellement stabilisée à l'oxyde d'yttrium.

En revanche, de préférence, $CeO_2$ n'est pas introduit sous la forme d'une zircone partiellement stabilisée à l'oxyde de cérium, ou seulement en partie.

La barbotine présente de préférence une teneur massique en matière sèche comprise entre 50 et 70%.

Comme cela est bien connu de l'homme du métier, la suspension peut encore contenir les constituants suivants :

- un dispersant, à raison de 0 à 10%, en pourcentage massique sur la base de la matière sèche ;
- un stabilisant de la viscosité, ou défloculant, à raison de 0 à 3%, en pourcentage massique sur la base de la matière sèche ;
- un modificateur de tension de surface, à raison de 0 à 3%, en pourcentage massique sur la base de la matière sèche ;
- un agent gélifiant, ou « agent de gélification », à raison de 0 à 2%, en pourcentage massique sur la base de la matière sèche.

Les dispersants ou défloculants, modificateurs de tension de surface, et agents gélifiants sont bien connus de l'homme du métier. Il en est de même des électrolytes adaptés pour réagir avec un agent gélifiant déterminé.

A titre d'exemples, on peut citer,

- comme dispersant ou défloculant, la famille des polyméthacrylates de sodium ou d'ammonium, la famille des polyacrylates de sodium ou d'ammonium, la famille des acides polyacyliques (sels de sodium ou d'ammonium), ou autres polyélectrolytes, la famille des citrates, par exemple d'ammonium, la famille des phosphates de sodium, et la famille des esters de l'acide carbonique ;
- comme modificateur de tension de surface, les solvants organiques tels que certains alcools aliphatiques ;
- comme agents gélifiants, certains éléments de la famille des polysaccharides naturels.

Tous ces éléments disparaissent pendant les étapes de fabrication ultérieures, en pouvant laisser toutefois subsister quelques traces.

De préférence, les poudres d'oxydes et/ou de précurseurs sont ajoutées dans un mélange d'eau et de dispersants/défloculants dans un broyeur à boulets. Après agitation, on ajoute de l'eau dans laquelle a été préalablement dissout un agent gélifiant de manière à obtenir la suspension.

A l'étape c), des gouttes de la suspension sont ensuite obtenues par écoulement de la suspension à travers un orifice calibré. Les gouttes sortant de l'orifice tombent dans un bain d'une solution de gélification (électrolyte réactif avec l'agent gélifiant) où elles durcissent après avoir recouvré une forme sensiblement sphérique.

A l'étape d), les particules crues ainsi obtenues sont extraites du bain, lavées à l'eau, puis, à l'étape e), séchées à l'étuve.

A l'étape f), les particules crues, lavées et séchées, sont frittées. Le frittage peut s'effectuer sous atmosphère réductrice, neutre ou oxydante. De préférence, le frittage s'effectue sous air, dans un four électrique, à pression atmosphérique.

De préférence, la durée de frittage est supérieure à 1 heure, supérieure à 2 heures et/ou inférieure à 10 heures, inférieure à 7 heures, ou inférieure à 5 heures. De préférence, la durée de frittage est comprise entre 2 et 5 heures.

Le frittage à l'étape f) est effectué à une température supérieure à 1300°C et de préférence inférieure 1550°C.

Si la suspension ne contient pas de composé de Mn, Zn, Cu, Pr, Nd, Sr, La, Ba ou Fe, c'est-à-dire si l'additif dans les particules frittées est CaO, la température de frittage est supérieure à 1400°C, de préférence supérieure à 1425°C.

Si la suspension est telle que la teneur molaire en $CeO_2$ des particules frittées obtenues en fin d'étape f) est comprise entre 10% et 11%, la température de frittage est supérieure à 1400°C.

La température de frittage est de préférence d'autant plus élevée que la quantité d'alumine est importante.

Les particules frittées obtenues se présentent de préférence sous la forme de billes présentant un plus petit diamètre compris entre 0,4 mm et 10 mm.

De manière surprenante, les inventeurs ont relevé la présence d'une microstructure particulière dans les particules frittées selon l'invention. Comme représentée sur la figure 1, lesdites particules frittées comportent des grains de zircone partiellement stabilisée 1, des grains d'alumine 2, des grains de forme allongée 3, qui peuvent se présenter sous la forme de baguettes sensiblement rectilignes, ainsi que des pores 4.

Le facteur de forme F des grains de forme allongée peut être inférieur à 0,3, voire inférieur à 0,25.

La figure 1 montre qu'il n'existe sensiblement pas de grains présentant des formes intermédiaires entre les grains de forme allongée 3 et les autres grains, de forme générale sensiblement sphérique. Sur une courbe représentant le nombre de grains en fonction du facteur de forme de ces grains, les grains étant regroupés dans des classes de facteurs de forme d'amplitude de 0,05, il existe donc une plage de facteurs de forme d'amplitude supérieure à 0,1, voire supérieure à 0,2, voire supérieure à 0,3, peu représentée, cette plage séparant la plage correspondant aux grains de forme allongée et la plage correspondant aux autres grains. L'amplitude d'une classe ou d'une plage de facteurs de forme est la différence entre les bornes supérieure et inférieure de cette classe ou de cette plage. Par « peu représentée », on entend « ne comportant aucun pic dépassant 30%, 20%, voire 10% du pic principal de la plage correspondant aux grains de forme allongée ». Dans un mode de réalisation, les grains de forme allongée sont ainsi représentés par un pic principal isolé sur ladite courbe.

Le taux de grains de forme allongée, mesuré suivant la méthode décrite précédemment, est supérieur à 0,05%, de préférence supérieur à 0,10%, de préférence supérieur à 0,15%, de préférence supérieur à 0,20%, de préférence supérieur à 0,25%, de préférence supérieur à 0,3%, voire supérieur à 0,4% et/ou inférieur à 5%, voire inférieur à 3%, de préférence inférieur à 2%, de préférence inférieur à 1 %.

Une analyse a montré que ces grains de forme allongée comportent l'élément Al et les cations métalliques des oxydes ajoutés à titre d'additif (Ca et/ou Mn et/ou Zn et/ou La et/ou Pr et/ou Sr et/ou Cu et/ou Nd et/ou Ba et/ou Fe). Ces grains de forme allongée peuvent également contenir l'élément Ce.

Les inventeurs ont également relevé que plus de 60%, de préférence plus de 80%, de préférence encore plus de 90% du volume de la zircone des particules frittées selon l'invention se présente sous la phase tétragonale.

$CeO_2$ et $Y_2O_3$ servent à stabiliser la zircone mais peuvent aussi être présents en dehors de celle- ci.

## Exemples

Les exemples non limitatifs suivants sont donnés dans le but d'illustrer l'invention.

Des billes frittées ont été préparées à partir d'une source de zircone (aire spécifique de l'ordre de 8 $m^2/g$ ; taille médiane < 5$\mu$m), d'une source de $CeO_2$ (taille médiane < 10$\mu$m), d'une source de $Y_2O_3$ (taille médiane <20$\mu$m), d'une source d'alumine (taille médiane < 5$\mu$m) et, en fonction des exemples réalisés, d'une source d'oxydes de manganèse, principalement sous la forme $Mn_3O_4$ ($D_{90}$ inférieur à 44 $\mu$m) et contenant également MnO. La pureté des sources de zircone et de $CeO_2$ était supérieure à 99%. La pureté de la source d'oxydes de manganèse, exprimée sous la forme MnO, était supérieure à 88%. Ces poudres ont été mélangées puis cobroyées en milieu humide jusqu'à obtention d'un mélange présentant une granulométrie fine (taille médiane < 0,3 $\mu$m). Le mélange a ensuite été séché.

Une suspension aqueuse comportant, en pourcentages en poids de la matière sèche, 7,5% d'un dispersant de type acide polyacrylique, 1 % d'un défloculant de type ester d'acide carbonique (stabilisant de la viscosité), et 1% d'un agent gélifiant, à savoir un polysaccharide de la famille des alginates, a ensuite été préparée à partir de ce mélange.

Un broyeur à boulets a été utilisé pour cette préparation de manière à obtenir une bonne homogénéité de la suspension : Une solution contenant l'agent gélifiant a d'abord été formée. Successivement on a ajouté dans de l'eau, optionnellement la sources d'oxyde de manganèse, la poudre d'alumine, la poudre de $ZrO_2$, la poudre de $CeO_2$, la poudre d'$Y_2O_3$, et le dispersant. La solution contenant l'agent gélifiant a ensuite été ajoutée. Le mélange ainsi obtenu a été agité pendant 8 heures. Puis le défloculant a été ajouté et le mélange a été agité pendant 0,5 heure. La taille des particules a été contrôlée par sédigraphie à l'aide d'un sédigraphe Sedigraph 5100 commercialisé par la société Micromeritics® (taille médiane <0,5$\mu$m), et de l'eau a été ajoutée en une quantité déterminée pour obtenir une suspension aqueuse à 61% en matière sèche et une viscosité, mesurée au viscosimètre Brookfield, inférieure à 8500 centipoises. Le pH de la suspension était alors d'environ 9.

La suspension a été forcée à travers un trou calibré et à un débit permettant d'obtenir après frittage des billes d'environ 1,2 mm à 1,4 mm dans le cadre de cet exemple. Les gouttes de suspension tombaient dans un bain de gélification à base d'un électrolyte, sel de cation divalent ou trivalent, réactif avec l'agent gélifiant. Les billes crues ont été collectées, lavées pour éliminer l'excédent de réactifs, puis séchées à 90°C pour éliminer l'humidité. Les billes ont ensuite été transférées dans un four de frittage où elles ont été portées, à une vitesse de 100°C/h, jusqu'à la température de frittage voulue. A la fin d'un palier de 4 heures à la température de frittage voulue, la descente en température a été effectuée par refroidissement naturel.

Deux séries de tests ont été effectuées sur des billes frittées présentant différentes compositions et obtenues selon le procédé qui vient d'être décrit. Dans la première série de tests, la température de frittage a été maintenue constante à 1375°C et on a observé l'influence de la composition des billes sur leur résistance à l'usure, indépendamment de la température de frittage. Dans la deuxième série de tests, la température de frittage a été modifiée de façon à observer son influence sur la résistance à l'usure des différentes compositions utilisées.

Protocoles de mesure

La densité des particules frittées est mesurée au moyen d'un pycnomètre hélium (AccuPyc 1330 de la société Micromeritics®).

Pour déterminer la résistance à l'usure dite « planétaire », 20 ml (volume mesuré à l'aide d'une éprouvette graduée) de particules frittées à tester de taille comprise entre 1,25 mm et 1,4 mm (sélectionnées par tamisage) sont pesées (masse $m_0$) et introduites dans un des 4 bols revêtus d'alumine frittée dense, de contenance de 125 ml d'un broyeur planétaire rapide du type PM400 de marque RETSCH. Sont ajoutés dans un des bols, 2,2 g de carbure de silicium de marque Presi (présentant une taille médiane D50 de 23 $\mu$m) et 40 ml d'eau. Le bol est refermé et mis en rotation (mouvement planétaire) à 400 tr/min avec inversion du sens de rotation toutes les minutes pendant 1 h30. Le contenu du bol est ensuite lavé sur un tamis de 100 $\mu$m de manière à enlever le carbure de silicium résiduel ainsi que les arrachements de matière dus à l'usure lors du broyage. Après un tamisage sur un tamis de 100 $\mu$m, les particules frittées sont ensuite séchées à l'étuve à 100 °C pendant 3 heures, puis pesées (masse m).

L'usure planétaire, exprimée en pourcentage, est donnée par la formule suivante :

$$100(m_0-m) / m_0$$

La taille moyenne des grains des particules frittées a été mesurée par la méthode de « Mean Linear Intercept ». Une méthode de ce type est décrite dans la norme ASTM E1382. Suivant cette norme, on trace des lignes d'analyse sur des images des particules, puis, le long de chaque ligne d'analyse, on mesure les longueurs, dites « intercepts », entre deux joints de grains consécutifs coupant ladite ligne d'analyse.

On détermine ensuite la longueur moyenne « l' » des intercepts « l».

Pour les tests ci-dessous, les intercepts ont été mesurés sur des images, obtenues par microscopie électronique à balayage, de sections de particules, lesdites sections ayant préalablement été polies jusqu'à obtention d'une qualité miroir puis attaquées thermiquement, à une température inférieure de 100°C à la température de frittage, pour révéler les joints de grains. Le grossissement utilisé pour la prise des images est choisi de façon à visualiser environ 100 grains sur une image. 5 images par particule ont été réalisées.

La taille moyenne « d » des grains d'une particule frittée est donnée par la relation : d =1,56.l'. Cette formule est issue de la formule (13) de « Average Grain Size in Polycrystalline Ceramics » M. I. Mendelson, J. Am. Cerm. Soc. Vol. 52, No.8, pp443-446.

L'aire spécifique est mesurée par la méthode BET (Brunauer Emmet Teller) telle que décrite dans Journal of American Chemical Society 60 (1938), pages 309 à 316.

Les inventeurs considèrent qu'une faible évolution de la teneur en zircone monoclinique et de la résistance à l'usure suite à un autoclavage à 140°C pendant 24 heures correspond à une bonne résistance à l'usure en conditions hydrothermales. Dans ce cas, la dernière colonne du tableau 2 précise que le produit testé est stable en conditions hydrothermales.

Les tableaux 1 et 2 suivants résument les résultats obtenus.

Tableau 1

| Ex | base somme ZrO$_2$ + CeO$_2$ + Y$_2$O$_3$ (% molaire) | | | Analyse chimique (% massique) | | | | | Usure planétaire (%) Température de frittage (°C) | | | | Densité (g/cm$^3$) Température de frittage (°C) | | | | Stabilité en conditions hydrothermales (Traitement en autoclave à 140°C, pendant 24 h) |
|---|---|---|---|---|---|---|---|---|---|---|---|---|---|---|---|---|---|
| | ZrO$_2$ | CeO$_2$ | Y$_2$O$_3$ | ZrO$_2$ en partie stabilisée | Al$_2$O$_3$ | Oxydes de manganèse ; exprimé en MnO | CaO | Impur. | 1320 °C | 1350 °C | 1375 °C | 1425 °C | 1320 °C | 1350 °C | 1375 °C | 1425 °C | |
| 1 (*) | 88 | 12 | - | 98 | 0,6 | 0,6 | 0,4 | 0,4 | 1,55 | | | | 6,20 | | | | Oui |
| 2 | 90 | 9 | 1 | 73,86 | 24,50 | 0,24 | 0,42 | 0, 98 | 2,7 | 1,5 | 0,9 | 0,8 | 5,44 | 5,34 | 4,98 | 5,14 | Oui |
| 3 | 90 | 9 | 1 | 74,35 | 24,50 | - | 0,34 | 0,81 | 28,2 | 11,6 | 5,6 | 1,4 | 5,49 | 5,49 | 5,46 | 5,03 | Oui |
| 4 | 90 | 9 | 1 | 74,14 | 24,30 | 0,48 | 0,31 | 0,77 | - | 2,0 | 1,0 | 0,9 | - | 5,40 | 5,01 | 5,19 | Oui |
| 5 | 88,62 | 10,79 | 0,59 | 74,32 | 24,30 | 0,40 | 0,35 | 0,63 | - | - | 6,7 | 0,9 | - | 5,47 | 5,48 | 5,07 | Oui |
| 6 | 88,62 | 10,79 | 0,59 | 74,35 | 24,00 | 0,40 | 0,86 | 0,39 | - | - | 5,3 | - | - | - | 5,44 | - | Oui |
| 7 | 90 | 9 | 1 | 73,79 | 24,40 | 0,92 | 0,46 | 0,43 | - | - | 2,3 | - | - | - | 5,43 | - | Oui |
| 8 | 90 | 9 | 1 | 72,46 | 24,10 | 2,47 | 0,43 | 0,54 | - | 1,4 | 1,2 | 1,4 | - | 5,32 | 5,09 | 5,32 | Oui |
| 9 | 90 | 9 | 1 | 72,42 | 24,20 | 2,43 | 0,80 | 0,15 | - | | 1,9 | - | - | - | - | - | Oui |
| 10 (*) | 90 | 9 | 1 | 71,55 | 23,10 | 0,48 | 4,53 | 0,34 | - | - | 21,6 | | - | - | 5,19 | | Oui |
| 11 (*) | 92,8 | 2,6 | 4,6 | 74,17 | 24,8 | 0,30 | 0,31 | 0,42 | - | 11,8 | 5,4 | - | - | 5,37 | 5,37 | - | Non |
| (*) : exemples hors invention | | | | | | | | | | | | | | | | | |

Tableau 2

| Ex | Taux de grains de forme allongée (%) | | | |
|----|------|---------|---------|---------|
|    | Température de frittage (°C) | | | |
|    | 1320 | 1350 °C | 1375 °C | 1425 °C |
| 1 (*) | Nd(**) | | | |
| 2 | 0,05 | - | 0,27 | 0,38 |
| 3 | Nd(**) | 0,07 | 0,08 | 0,14 |
| 4 | - | - | 0,29 | 0,42 |
| 5 | - | - | 0,30 | 0,45 |
| 6 | - | - | 0,34 | - |
| 7 | | - | 0,49 | - |
| 8 | - | 1,97 | 1,54 | 2 |
| 10 (*) | - | - | 1,50 | |
| 11 (*) | - | Nd (**) | Nd (**) | - |
| (*) : exemple hors invention (**) : Nd : non détectable | | | | |

Les inventeurs considèrent qu'il existe un bon compromis entre le rendement de broyage et l'usure planétaire lorsque :

- l'usure planétaire est inférieure ou égale à 3%, et
- la densité est comprise entre 4,5 et 5,9 g/cm$^3$.

De préférence, l'usure planétaire est inférieure à 2,5%, de préférence inférieure à 2%, voire inférieure à 1,5%, voire même inférieure à 1,0%, et/ou la densité est comprise entre 4,8 et 5,5 g/cm$^3$, voire comprise entre 4,9 et 5,3 g/cm$^3$.

Pour l'exemple 3, ne contenant pas d'autre composé d'additif que CaO, une température de frittage supérieure à 1400°C est nécessaire pour atteindre une résistance à l'usure satisfaisant les conditions du compromis. L'ajout d'un autre composé d'additif que CaO est donc avantageux, éventuellement en plus de CaO.

Une comparaison des exemples 3 et 4 montre en particulier l'intérêt de la présence d'oxydes de manganèse pour une teneur en CaO donnée.

Les exemples 5 et 6, présentant une teneur molaire en CeO$_2$ supérieure à 10%, montrent la nécessité d'une température de frittage supérieure à 1400°C pour atteindre une résistance à l'usure satisfaisant les conditions du compromis. Les plages préférées en CeO$_2$ selon l'invention permettent avantageusement de limiter la température de frittage. Ces exemples montrent également l'effet positif d'une augmentation limitée de la teneur en CaO.

L'exemple 10, présentant une teneur en CaO de 4,53%, illustre l'importance de limiter la teneur en CaO.

L'exemple 11, dont les teneurs en CeO$_2$ et Y$_2$O$_3$ ne sont pas à l'intérieur des plages des produits selon l'invention, n'est pas suffisamment résistant à l'usure en conditions hydrothermales.

L'exemple 2 est l'exemple préféré d'entre tous.

Le tableau 2 montre par ailleurs une corrélation entre les performances obtenues et le taux de grains de forme allongée.

Comme cela apparaît clairement à présent, l'invention fournit une particule frittée présentant un bon compromis entre résistance à l'usure planétaire et densité, y compris dans des conditions hydrothermales.

Bien entendu, l'invention n'est pas limitée aux exemples et modes de réalisation décrits ci-dessus. En particulier, d'autres systèmes de gélification conviennent pour fabriquer une bille céramique selon l'invention. Ainsi, US 5,466,400, FR 2 84 24 38 et US 4,063,856 décrivent des procédés sol-gel applicables. FR 2 84 24 38 et US 4,063,856 utilisent un système de gélification proche de celui décrit ci-dessus (à base d'alginate) alors que US 5,466,400 décrit un système de gélification très différent.

Le procédé décrit dans US 2009/0036291 et les procédés de formation de billes par pressage ou par granulation sont également envisageables.

**Revendications**

1. Particule frittée présentant un rapport entre son plus petit diamètre et son plus grand diamètre supérieur à 0,6 et présentant une analyse chimique telle que, en pourcentages en masse,

| | |
|---|---|
| $ZrO_2$ partiellement stabilisée avec $CeO_2$ et $Y_2O_3$ : | complément à 100%, |
| $Al_2O_3$ : | 10 - 60% |
| additif sélectionné parmi CaO, un oxyde de manganèse, $La_2O_3$, SrO, BaO, et leurs mélanges : | 0,2 - 6%, |
| la teneur en CaO étant inférieure à 2%, impuretés : | < 2%, |

la zircone étant stabilisée avec $CeO_2$ et $Y_2O_3$, présents en des teneurs molaires, en pourcentages molaires sur la base de la somme de $ZrO_2$, $CeO_2$ et $Y_2O_3$, telles que

$CeO_2$ : 6 - 11 mol% et

$Y_2O_3$ : 0,5 - 2 mol,

la particule étant obtenue par frittage à une température de frittage supérieure à 1300°C,
la température de frittage étant supérieure à 1400°C si l'additif est CaO ou si la teneur molaire en $CeO_2$ est comprise entre 10% et 11 %.

2. Particule frittée selon la revendication 1, dans laquelle ladite teneur molaire en $CeO_2$ est inférieure 10% et supérieure à 7%, et/ou ladite teneur molaire en $Y_2O_3$ est inférieure à 1,2% et supérieure à 0,8%.

3. Particule frittée selon l'une quelconque des revendications précédentes, dans laquelle la teneur en alumine $Al_2O_3$ est supérieure à 15% et inférieure à 55%, en pourcentages massiques sur la base des oxydes.

4. Particule frittée selon l'une quelconque des revendications précédentes, dans laquelle l'additif est choisi parmi CaO, MnO, $MnO_2$, $Mn_2O_3$, $Mn_3O_4$, $La_2O_3$, SrO, et leurs mélanges.

5. Particule frittée selon l'une quelconque des revendications précédentes, dans laquelle la teneur en additif est supérieure à 0,4% et inférieure à 5%, en pourcentages en masse sur la base des oxydes.

6. Particule frittée selon l'une quelconque des revendications précédentes, dans laquelle l'additif comporte CaO, la teneur en CaO étant supérieure à 0,3% et inférieure à 1,5%, en pourcentages en masse sur la base des oxydes.

7. Particule frittée selon l'une quelconque des revendications précédentes, dans laquelle la teneur en impuretés est inférieure à 1%.

8. Particule frittée selon l'une quelconque des revendications précédentes, se présentant sous la forme d'une bille présentant une sphéricité supérieure à 0,7.

9. Particule frittée selon l'une quelconque des revendications précédentes, présentant des grains de forme allongée, le taux de grains de forme allongée, mesuré en diffraction X, étant compris entre 0,05% et 5%.

10. Particule frittée selon l'une quelconque des revendications précédentes, dont la zircone se présente pour plus de 80% de son volume sous la phase tétragonale.

11. Procédé de fabrication de particules frittées selon l'une quelconque des revendications précédentes, comprenant les étapes successives suivantes :

a) si nécessaire, broyage d'une ou de plusieurs des poudres de matières premières, de préférence par cobroyage, de manière à obtenir, par mélange desdites poudres, un mélange particulaire présentant une taille médiane inférieure à 1,0 $\mu m$,
b) préparation d'une suspension à partir desdites poudres, la composition de la suspension étant adaptée de manière à obtenir, à l'issue de l'étape f), des particules frittées présentant une composition conforme à celle d'une particule frittée selon l'une quelconque des revendications précédentes.

c) durcissement de gouttes de la suspension sous la forme de particules crues,
d) lavage,
e) séchage,
f) frittage à une température de frittage supérieure à 1300°C de manière à obtenir des particules frittées,

la température de frittage étant supérieure à 1400°C, de préférence supérieure à 1425°C :

(C1) si la suspension ne contient pas de composé de Mn, Zn, Cu, Pr, Nd, Sr, La, Ba ou Fe, c'est-à-dire si l'additif dans les particules frittées est CaO, ou
(C2) si la suspension est telle que la teneur molaire en $CeO_2$ des particules frittées obtenues en fin d'étape f), en pourcentage molaire sur la base de la somme de $ZrO_2$, $CeO_2$ et $Y_2O_3$, est comprise entre 10% et 11 %.

12. Mélange particulaire comportant des particules de $ZrO_2$, de $Al_2O_3$, de $CeO_2$, de $Y_2O_3$, et d'un additif choisi parmi CaO, et/ou un oxyde de manganèse et/ou $La_2O_3$ et/ou SrO et/ou BaO et/ou des particules de précurseurs de ces oxydes, dans des proportions telles que, par frittage dudit mélange particulaire, on obtient une particule frittée selon l'une quelconque des revendications 1 à 10.

13. Mélange particulaire selon la revendication précédente, dont la taille médiane est inférieure à 1 $\mu$m.

14. Broyeur contenant des particules frittées selon l'une quelconque des revendications 1 à 10 ou fabriquées suivant un procédé selon la revendication 11.

15. Utilisation de particules frittées selon l'une quelconque des revendications 1 à 10 ou fabriquées suivant un procédé selon la revendication 11, comme média de broyage.

**Patentansprüche**

1. Gesintertes Teilchen, welches ein Verhältnis zwischen seinem kleinsten und seinem größten Durchmesser von größer als 0,6 aufweist sowie eine chemische Analyse wie folgt in Massenprozenten,

| | |
|---|---|
| $ZrO_2$, teilweise stabilisiert mit $CeO_2$ und $Y_2O_3$ : | Vervollständigend zu 100% |
| $Al_2O_3$ : | 10 - 60% |
| Zusatz ausgewählt aus CaO, einem Manganoxyd, $La_2O_3$, SrO, BaO, und ihren Mischungen: | 0,2 - 6% |
| wobei der Gehalt an CaO kleiner als 2% ist, sowie Verunreinigungen: | < 2%, |

wobei das zirkonoxyd stabilisiert ist mit $CeO_2$ und $Y_2O_3$ welche vorliegen in Mol-Gehalten in Mol-Prozenten auf der Basis der Summe von $ZrO_2$, $CeO_2$ und $Y_2O_3$, derart, dass

$CeO_2$ :   6 - 11 mol% und
$Y_2O_3$ :   0,5 - 2 mol%

beträgt,
wobei das Teilchen durch Sintern bei einer Sintertemperatur oberhalb von 1300°C erhalten wird, wobei die Sintertemperatur größer als 1400 °C ist, wenn der Zusatz CaO ist oder wenn der Mol-Gehalt an $CeO_2$ zwischen 10% und 11% liegt.

2. Gesintertes Teilchen nach Anspruch 1, in welchem der Mol-Gehalt an $CeO_2$ kleiner als 10% und größer als 7% ist, und/oder der Mol-Gehalt an $Y_2O_3$ kleiner als 1,2% und größer als 0,8% ist.

3. Gesinteres Teilchen nach einem.der vorhergehenden Ansprüche, in welchem der Gehalt an Aluminiumoxyd $Al_2O_3$ größer als 15% und kleiner als 55% ist und zwar in Massenprozenten auf der Basis von Oxyden.

4. Gesintertes Teilchen nach einem der vorhergehenden Ansprüche, in welchem der Zusatz ausgewählt ist aus CaO, MnO, $MnO_2$, $Mn_2O_3$, $Mn_3O_4$, $La_2O_3$, SrO sowie deren Mischungen.

**5.** Gesintertes Teilchen nach einem der vorhergehenden Ansprüche, in welchem der Gehalt an dem Zusatz größer als 0,4% und kleiner als 5% in Massenprozenten auf der Basis von Oxyden ist.

**6.** Gesintertes Teilchen nach einem der vorhergehenden Ansprüche, in welchem der Zusatz CaO enthält, wobei der Gehalt an CaO größer als 0,3% und kleiner als 1,5% in Massenprozenten auf der Basis von Oxiden ist.

**7.** Gesintertes Teilchen nach einem der vorhergehenden Ansprüche, in welchem der Gehalt an Verunreinigungen kleiner als 1% ist.

**8.** Gesintertes Teilchen nach einem der vorhergehenden Ansprüche, welches sich in Form einer Kugel darstellt, welche eine Sphärizität von größer als 0,7 aufweist.

**9.** Gesintertes Teilchen nach einem der vorhergehenden Ansprüche, welche Körner in in die Länge gezogener Form aufweist, wobei die Quote der in die Länge gezogenen Körner in Diffraktion X gemessen, zwischen 0,05 % und 5% liegt.

**10.** Gesintertes Teilchen nach einem der vorhergehenden Ansprüche, dessen Zirkonoxyd sich für mehr als 80% seines Volumens in tetragonaler Phase darstellt.

**11.** Verfahren zur Herstellung von gesinterten Teilchen nach einem der vorhergehenden Ansprüche mit folgenden aufeinanderfolgenden Verfahrensschritten:

a) wenn erforderlich Vermahlen eines oder mehrerer Pulver erster Materialien, vorzugsweise durch einen Co-Mahlvorgang, um durch Mischung dieser Pulver eine Teilchenmischung zu erhalten, die eine mittlere Größe von kleiner als 1,0 $\mu$m aufweist,
b) Zubereitung einer Suspension ausgehend von den Pulvern, wobei die Zusammensetzung der Suspension so angepasst ist, um am Ende des Verfahrensschritts f) gesinterte Teilchen zu erhalten, die eine Zusammensetzung aufweisen, die konform ist mit der eines gesinterten Partikels nach einem der vorhergehenden Ansprüche,
c) Härten von Suspensionstropfen in Form von Rohteilchen,
d) Waschen,
e) Trockung,
f) Sintern bei einer Sintertemperatur von oberhalb 1300°C, um gesinterte Teilchen zu erhalten, wobei die Sintertemperatur höher als 1400°C ist, vorzugsweise höher als 1425°C:

Cl) wenn die Suspension keine Zusammensetzung von Mn, Zn, Cu, Pr, Nd, Sr, La, Ba oder Fe enthält, d. h. wenn der Zusatz in den gesinterten Teilchen CaO ist oder
C2) wenn die Suspension derart ist, dass der Mol-Gehalt an $CeO_2$ der am Ende des verfahrensschritts f) erhaltenen gesinterten Teilchen in Mol-Prozenten auf der Basis der Summe von $ZrO_2$, $CeO_2$ und $Y_2O_3$ zwischen 10% und 11% liegt.

**12.** Teilchenmischung enthaltend Teilchen von $ZrO_2$, von $Al_2O_3$, von $CeO_2$, von $Y_2O_3$ und von einem Zusatz, der aus CaO und/oder einem Manganoxyd und/oder $La_2O_3$ und/oder SrO und/oder BaO und/oder Teilchen von Vorläufern dieser Oxyden in Proportionen enthält, derart, dass durch Sinterung der Teilmischung ein gesintertes Teilchen nach einem der Ansprüche 1 bis 10 erhalten wird.

**13.** Teilchenmischung nach dem vorhergehenden Anspruch, deren mittlere Größe kleiner als 1 $\mu$m ist.

**14.** Mühle, die gesintere Teilchen nach einem der Ansprüche 1 bis 10 aufweist oder nach einem Verfahren gemäß Anspruch 11 hergestellt sind.

**15.** Verwendung von gesinterten Teilchen nach einem der Ansprüche 1 bis 10 oder die nach einem Verfahren nach Anspruch 11 hergestellt sind, als Mittel zum Mahlen.

**Claims**

**1.** A sintered particle having a ratio between its smallest diameter and its largest diameter of more than 0.6 and having the following chemical analysis, as percentages by weight:

• $ZrO_2$ partially stabilized with $CeO_2$ and $Y_2O_3$ :

complement to 100%;

• $Al_2O_3$ : 10% - 60%;
• additive selected from CaO, a manganese oxide,
$La_2O_3$, SrO, BaO and mixtures thereof: 0.2%- 6%;
• the quantity of CaO being less than 2%;
• impurities: < 2%;
• the zirconia being stabilized with $CeO_2$ and $Y_2O_3$ present in molar quantities, as molar percentages based on the sum of $ZrO_2$, $CeO_2$ and $Y_2O_3$, such that:
• $CeO_2$ : 6 mol% - 11 mol%;
and
• $Y_2O_3$ : 0.5 mol% - 2 mol%;
• the particle being obtained by sintering at a sintering temperature higher than 1300°C, the sintering temperature being higher than 1400°C if the additive is CaO or if the molar $CeO_2$ content is in the range 10% to 11%.

2. A sintered particle according to claim 1, wherein said molar $CeO_2$ content is less than 10% and more than 7%, and/or said molar $Y_2O_3$ content is less than 1.2% and more than 0.8%.

3. A sintered particle according to any preceding claim, wherein the alumina, $Al_2O_3$, content is more than 15% and less than 55%, as a percentage by weight based on the oxides.

4. A sintered particle according to any preceding claim, wherein the additive is selected from CaO, MnO, $MnO_2$, $Mn_2O_3$, $Mn_3O_4$, $La_2O_3$, SrO, and mixtures thereof.

5. A sintered particle according to any preceding claim, wherein the additive content is more than 0.4% and less than 5%, as a percentage by weight based on the oxide.

6. A sintered particle according to any preceding claim, wherein the additive comprises CaO, the quantity of CaO being more than 0.3% and less than 1.5%, as a percentage by weight based on the oxide.

7. A sintered particle according to any preceding claim, wherein the quantity of impurities is less than 1%.

8. A sintered particle according to any preceding claim, in the form of a bead with a sphericity of more than 0.7.

9. A sintered particle according to any preceding claim, having grains with an elongate shape, the quantity of grains with an elongate shape, measured by X-ray diffraction, being in the range 0.05% to 5%.

10. A sintered particle according to any preceding claim, wherein more than 80% by volume of the zirconia is in the tetragonal phase.

11. A method of producing sintered particles according to any preceding claim, the method comprising the following steps in succession:

a) if necessary, milling one or more starting material powders, preferably by co-milling, in order to obtain, by mixing said powders, a particulate mixture with a median size of less than 1.0 $\mu$m,
b) preparing a suspension from said powders, the composition of the suspension being adapted so as to obtain, at the end of step f), sintered particles with a composition in accordance with that of a sintered particle according to any one of the preceding claims,
c) hardening droplets of the suspension into the form of green particles,
d) washing,
e) drying,
f) sintering at a sintering temperature of more than 1300°C in order to obtain sintered particles;

the sintering temperature being more than 1400°C, preferably more than 1425°C :

(Cl) if the suspension contains no compound of Mn, Zn, Cu, Pr, Nd, Sr, La, Ba or Fe, i.e. if the additive in the sintered particles is CaO,

or

(C2) if the suspension is such that the molar $CeO_2$ content of the sintered particles obtained at the end of step f), as a molar percentage based on the sum of $ZrO_2$, $CeO_2$ and $Y_2O_3$, is in the range 10% to 11%.

12. A particulate mixture comprising particles of $ZrO_2$, $Al_2O_3$, $CeO_2$, $Y_2O_3$, and an additive selected from CaO and/or an oxide of manganese and/or $La_2O_3$ and/or SrO and/or BaO and/or precursor particles of said oxides, in proportions such that, by sintering said particulate mixture, a sintered particle according to anyone of claims 1 to 10 is obtained.

13. A particulate mixture according to the preceding claim, wherein the median size is less than 1 $\mu$m.

14. A mill containing sintered particles according to any one of claims 1 to 10 or produced using a method according to claim 11.

15. The use of sintered particles according to any one of claims 1 to 10 or produced using a method according to claim 11, as a milling medium.

Fig. 1

## RÉFÉRENCES CITÉES DANS LA DESCRIPTION

**Documents brevets cités dans la description**

- US 20090036291 A
- WO 2009018024 A
- US 5466400 A
- FR 2842438
- US 4063856 A

**Littérature non-brevet citée dans la description**

- **M. I. MENDELSON.** Average Grain Size in Polycrystalline Ceramics. *J. Am. Cerm. Soc.,* vol. 52 (8), 443-446
- *Journal of American Chemical Society,* 1938, vol. 60, 309-316